# EUROPEAN PATENT SPECIFICATION

(11) **EP 2 975 278 B1**
(45) Date of publication and mention of the grant of the patent: **06.02.2019**
(21) Application number: 14306169.5
(22) Date of filing: 18.07.2014
(51) Int. Cl.: F16C 19/06, F16C 25/08, F16C 33/60, F16C 33/61, F16C 27/06, F16C 19/16, F16C 33/58, F16C 33/64

(54) **Rolling bearing and method for manufacturing such a rolling bearing**
Wälzlager und Verfahren zur Herstellung eines solches Wälzlagers
Palier à roulement et procédé de fabrication d'un tel palier

(43) Date of publication of application: 20.01.2016
(73) Proprietor: Aktiebolaget SKF, 415 50 Göteborg (SE)
(72) Inventor: Lepine, Thomas, 37510 VILLANDRY (FR); Montboeuf, Bruno, 37390 CERELLES (FR); Jansen, Daniel, 37000 TOURS (FR); Houart, Amandine, 41110 SAINT AIGNAN DU CHER (FR); Jullien, Tommy, 37100 TOURS (FR); Bussit, Sylvain, 37380 MONNAIE (FR)
(74) Representative: Kloker, Markus

(56) References cited:
- EP-A1- 1 956 254
- EP-A1- 2 562 435
- FR-A1- 2 594 189
- GB-A- 2 250 064

## Description

### TECHNICAL FIELD OF THE INVENTION

The invention relates to a rolling bearing and to a method for manufacturing such a rolling bearing.

### BACKGROUND OF THE INVENTION

Rolling bearings comprising at least one ring provided with two raceways, for example formed by toric wires, mounted in an envelope and preloaded by an elastic element are known from EP-B-1 956 254. Such rolling bearings are often used in steering columns to mitigate the effects of column misalignment.

The wires used in such rolling bearings are manufactured from linear metallic wires which are deformed to obtain a circular shape. The ends of the wires are joined each other, and the junction produces a noise and vibrations when the rolling elements roll onto it. It is also known to use raceways with spherical surfaces formed from a stamped metal sheet. Other causes, such as rugosity of metallic contact surfaces, cause noise and vibrations. Thus, the noise emission of such types of rolling bearings should be reduced.

It is known from GB 2 250 064 A a rolling bearing comprising an outer ring, an inner ring and balls between said rings, said outer ring comprising an envelope having an axial portion and two radial portions, and two wires arranged in said envelope to form a raceway for the balls. The outer ring further comprises a first annular preloading element (between a first wire and a first radial portion), a second annular preloading element (here a spring between a second wire and a second radial portion) and a damping element radially arranged between the axial portion and each of the wires. The damping element forms a single part with the first preloading element. The damping element comprises a radially inwardly projection that cooperate with said spring so as to retain it during the assembly of said rolling bearing.

### SUMMARY OF THE INVENTION

The aim of the invention is to provide a new rolling bearing which has a structure which reduces noise emission and vibrations in operation.

To this end, the invention concerns a rolling bearing comprising an outer ring and an inner ring, both having a raceway for rolling elements placed between said inner and outer rings in contact with said raceways, at least one of the rings comprising an envelope having an axial portion and, connected to the edges of the axial portion, two radial portions, and two half-raceways arranged in said envelope to form the raceway of this ring, the rolling bearing further comprising an annular preloading element made of an elastic material and arranged inside the envelope to be preloaded axially between a first radial portion of the envelope and a lateral face of a first half-raceway. This rolling bearing further comprises a damping element radially arranged between the axial portion of the envelope and each of the half-raceways, and a second preloading element extending axially between a second radial portion and a lateral face of the second half-raceway.

According to the invention, the damping element forms a single part with the preloading element and the second preloading element, said damping element and second preloading portion being formed by a layer of damping material on axial portion in contact with both half raceways and second radial portion of the envelope.

Thanks to the invention, vibrations and noise are reduced by the damping elements disposed between the half-raceways and the axial portion of the envelope. Another advantage of the present invention is that an axial preload can be exerted on the rolling elements by the damping elements.

According to further aspects of the invention which are advantageous but not compulsory, such a rolling bearing may incorporate one or several of the following features:
- The damping element is made of an elastomeric material.
- The damping element is made of at least two different materials, one being adapted to exert an axial preload and another being adapted to damp vibrations.
- The rolling elements are balls.
- At least one of the half-raceways is formed by a wire.
- At least one of the half-raceways is an annular ring provided with a contact surface having a spherical shape for contacting the rolling elements.
- An edge of the annular ring is in contact with the damping element.
- The envelope comprises, on at least one side, an axial portion connected to the radial portion to form an annular chamber shaped like a U in cross section and wherein the annular preloading element is housed in this chamber.

The invention also concerns a method for manufacturing a rolling bearing as mentioned here-above. This method is characterized in that it comprises steps consisting in:
a) manufacturing a preformed envelope having one of its radial portions extending axially from the axial portion of the envelope, in a pre-deformation state,
b) providing the preformed envelope with a layer of damping material formed as a single part with the preloading element and the second preloading element on the axial portion in contact with both half raceways, a first radial portion and the radial portion extending axially in a pre-deformation state,
c) mounting the half-raceways and the rolling elements in the envelope,
d) shaping the envelope by deforming the radial portion towards one of the half-raceways so the radial portion preloads the half-raceways and the rolling elements.

### BRIEF DESCRIPTION OF THE DRAWINGS

The invention will now be explained in reference to the annexed figures, 3 and 4 as an illustrative example. In the annexed figures:
- figure 1 is a partial sectional view of a rolling bearing according partially to the invention;
- figure 2 is a partial sectional view of a rolling bearing according to the background art;
- figure 3 is a partial sectional view of a rolling bearing according to the invention;
- figure 4 is a partial sectional view of a rolling bearing according to the background art;
- figure 5 is a partial sectional view of an envelope, a preloading element and a damping element belonging to a rolling bearing according to the invention, in a pre-deformation state.

### DETAILED DESCRIPTION OF SOME EMBODIMENTS

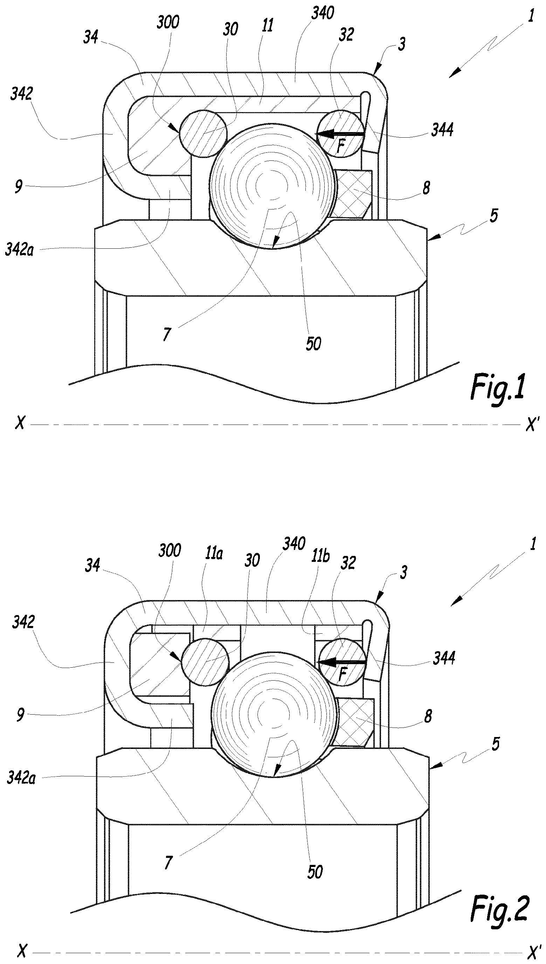

A rolling bearing 1 according to the invention is represented on figure 1. According to the invention, this rolling bearing 1 comprises an outer ring 3, an inner ring 5 and rolling elements, which are balls 7 in this example. Each of outer ring 3 and inner ring 5 has raceways for balls 7, which are arranged in a cage 8 which maintains the balls 7 equally spaced, and placed between outer ring 3 and inner ring 5. The inner ring 5 is massive and comprises a concave recess on an outer surface forming a raceway 50 for the balls 7. The raceway of outer ring 3 is formed by two half-raceways. In the example of figure 1, the half-raceways of outer ring 3 are wires 30 and 32. Outer ring 3 comprises an envelope 34 in which wires 30 and 32 are arranged. Envelope 34 comprises an axial portion 340, which extends along a rotation axis X-X' of rolling bearing 1. Envelope 34 also comprises two radial portions 342 and 344 connected to the edges of axial portion 340.

In this description the adjectives "axial" and "radial" are used in reference to rotation axis X-X'.

Radial portion 342 comprises an axial portion 342a which forms an annular chamber shaped like a U in cross-section.

Rolling bearing 1 further comprises an annular preloading element 9 which is made of an elastic material and arranged inside envelope 34 to be preloaded axially between radial portion 342 and a lateral face of one of the half-raceways. In the example shown, preloading element 9 is preloaded against a lateral face 300 of wire 30.

Not according to the invention, radial portion 344, which is opposed to preloading element 9 along axis X-X', exerts a preloading force F against wire 32 along axis X-X'. This preloading force F permits to keep contact between rolling elements 7 and wires 30 and 32.

According to the invention, in order to reduce vibrations and noise emission inside rolling bearing 1, rolling bearing 1 comprises at least one damping element 11 radially arranged between axial portion 340 and each of wires 30 and 32. Damping element 11 may be made of an elastomeric material such as rubber. Thanks to damping element 11, wires 30 and 32 are not in direct contact with axial portion 340. This prevents vibrations and noise emission which can occur when two metallic surfaces are in contact. This reduces also the noise and vibrations produced by the rolling of the non-shown junction of the circumferential ends of wires 30 and 32 against balls 7.

Damping element 11 may be overmoulded onto envelope 34. Alternatively, damping element 11 may be glued to envelope 34 or attached to envelope 34 by any appropriate means.

As represented on figure 1, according to the invention element 11 is formed by a single layer which is in contact with both wires 30 and 32. Damping element 11 forms a single part with preloading element 9. The part formed by preloading element 9 and damping element 11 may be over-molded on envelope 34 or be mounted as a separately manufactured part.

Bearings from background art are respectively represented on figures and 4. In these embodiments, elements similar to those of the first embodiment have the same references and work in the same way. Only the differences from the first embodiment are detailed here-after.

On figure 2, damping element 11 does not form a single part with preloading element 9. Damping element 11 is formed by two linings 11a and 11b which are each in contact with one of wires 30 and 32. Damping linings 11a and 11b are radially aligned with wires 30 and 32, and linings 11a and 11b are axially separated by an empty space.

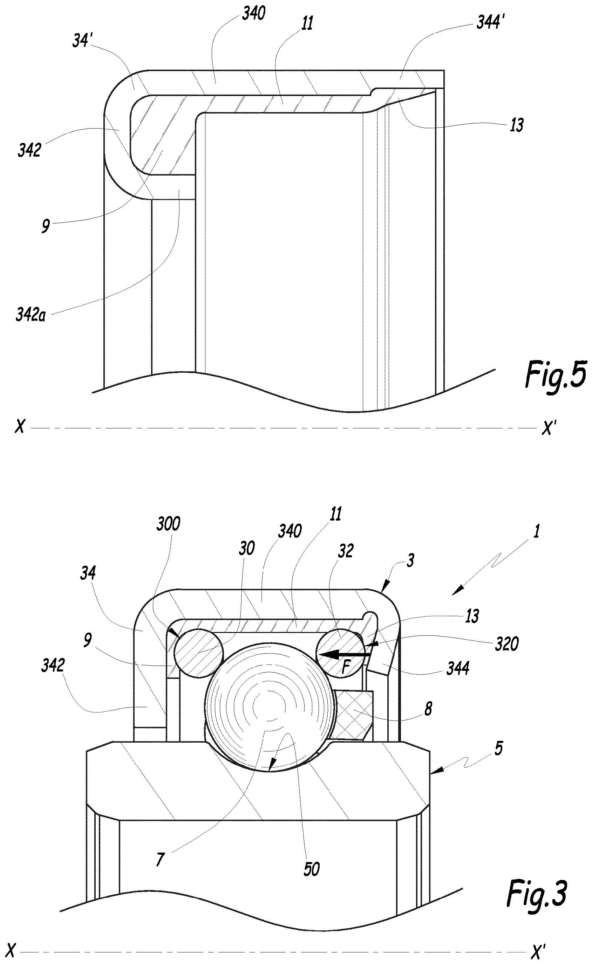

According to the invention, in the embodiment of figure 3, preloading element 9 is not arranged inside a U-shaped annular chamber formed by envelope 34. In this embodiment, radial portion 342 is straight and perpendicular to X-X'. Preloading element 9 is formed by a layer of elastic material extending axially between radial portion 342 and wire 30.

In this embodiment, rolling bearing 1 comprises a second preloading element 13 formed by a layer of elastic material extending axially between a lateral face 320 of wire 32 and radial portion 344.

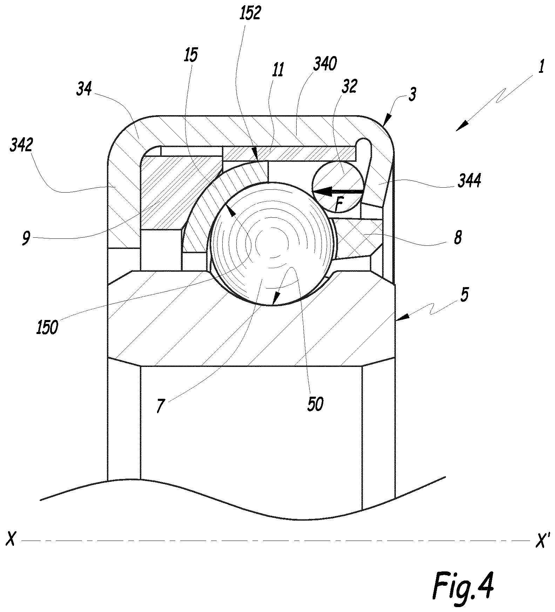

On figure 4, the half-raceways of rolling bearing 1 comprise a ring 15 with a spherical annular inner surface 150, which contacts balls 7, and a wire 32 instead of two wires 30 and 32. An outer edge 152 of ring 15 is in contact with damping element 11. Such a ring 15 may be formed from a stamped metal sheet.

According to a non-shown embodiment of the invention, each of the half-raceways may be formed by a ring with a spherical surface.

According to another non-shown embodiment, spherical inner surface 150 may have a large radius of curvature, so that surface 150 is almost flat and defines a contact point with each rolling element if the rolling elements are balls.

According to the invention, on the embodiment of figure 5, rolling bearing 1 combines the U-shaped annular chamber shown on figure 1 and the second preloading element 13 of figure 3. In such as case, rolling bearing 1 is manufactured thanks to the following method: in a first step represented on figure 5, a preformed envelope 34' is manufactured, in which radial portion 344 is in a pre-deformation state 344' and extends axially from axial portion 340. The preformed envelope 34' may be manufactured by forging or stamping.

In a second step, preformed envelope 34' is provided with a layer of damping material on axial portion 340 and on radial portion 344'.

In a third step, the half-raceways and the rolling elements of rolling bearing 1 are mounted in envelope 34'.

In a final step, envelope 34' is shaped in its final state 34 by deforming radial portion 344' towards one of the half-raceways so that, as shown on figure 3, radial portion 344 preloads wire 32 and rolling elements 7.

According to a non-shown embodiment of the invention, inner ring 5 may comprise an envelope, half-raceways, a preloading element and a damping element similar to the one described for outer ring 3, while outer ring 3 may comprise a raceway similar to raceway 50.

According to another non-shown embodiment of the invention, damping element 11 may be made of at least two different materials. For example, damping element 11 may include a first material forming a first layer, and a second material radially superimposed to the first material to form a second layer. One of the materials may be adapted to damp vibrations, while the second material may be adapted to exert an axial preload on the rolling elements via the contact between the half-raceways and the rolling elements.

The features of the above described embodiments may be combined to form new embodiments of the invention.

## Claims

1. Rolling bearing (1) comprising an outer ring (3) and an inner ring (5), both having a raceway (30, 32, 50) for rolling elements (7) placed between said inner and outer rings (3, 5) in contact with said raceways (30, 32, 50), at least one of the rings (3) comprising:
- an envelope (34) having an axial portion (340) and, connected to the edges of the axial portion (340), two radial portions (342, 344),
- two half-raceways (30, 32) arranged in said envelope (34) to form the raceway of this ring (3),
- an annular preloading element (9) made of an elastic material and arranged inside the envelope (34) to be preloaded axially between a first radial portion (342) of the envelope (34) and a lateral face (300) of a first half-raceway (30),
- a damping element (11) formed by a single layer which is in contact with both half-raceways (30, 32) and radially arranged between the axial portion (340) of the envelope (34) and each of the half-raceways (30, 32), and
- a second preloading element (13) extending axially between a second radial portion (344) and a lateral face (320) of the second half-raceway (32),
**characterized in that** the damping element (11) forms a single part with the preloading element (9) and the second preloading element (13), said damping element (11) and second preloading portion (13) being formed by a layer of damping material on axial portion (340) and second radial portion (344) of the envelope (34).

2. Rolling bearing according to claim 1, wherein the damping element (11) is made of an elastomeric material.

3. Rolling bearing according to any preceding claim, wherein the rolling elements are balls (7).

4. Rolling bearing according to any preceding claim, wherein at least one of the half-raceways is formed by a wire (30, 32).

5. Rolling bearing according to claim 1, wherein at least one of the half-raceways is an annular ring (15) provided with a contact surface (150) having a spherical shape for contacting the rolling elements (7).

6. Rolling bearing according to claim 5, wherein an edge (152) of the annular ring (15) is in contact with the damping element (11).

7. Rolling bearing according to any preceding claim, wherein the envelope (34) comprises, on at least one side, an axial portion (342a) connected to the radial portion (342) to form an annular chamber shaped like a U in cross section and wherein the annular preloading element (9) is housed in this chamber.

8. Method for manufacturing a rolling bearing (1) according to any preceding claim, wherein it comprises steps consisting in:
a) manufacturing a preformed envelope (34') having one of its radial portions (344') extending axially from the axial portion (340) of the envelope (34'), in a pre-deformation state,
b) providing the preformed envelope (34') with a layer of damping material (11) formed as a single part with the preloading element (9) and the second preloading element (13) on the axial portion (340), a first radial portion (342) and the radial portion (344') extending axially in a pre-deformation state,
c) mounting the half-raceways (30, 32) and the rolling elements (7) in the envelope (34'),
d) shaping the envelope (34) by deforming the radial portion (344') towards one of the half-raceways (32) so the radial portion (344) preloads the half-raceways (30, 32) and the rolling elements (7).

## Patentansprüche

1. Wälzlager (1), umfassend einen Außenring (3) und einen Innenring (5), wobei beide eine Laufbahn (30, 32, 50) für Wälzkörper (7) aufweisen, die zwischen dem Innenring und dem Außenring (3, 5) angeordnet sind, die mit den Laufbahnen in Kontakt (30, 32, 50) stehen, wobei zumindest einer der Ringe (3) Folgendes umfasst:
- eine Hülle (34) mit einem axialen Abschnitt (340) und zwei mit den Kanten des axialen Abschnitts (340) verbundenen radialen Abschnitten (342, 344),
- zwei Halblaufbahnen (30, 32), die in der Hülle (34) angeordnet sind, um die Laufbahn dieses Rings (3) auszubilden,
- ein ringförmiges Vorspannelement (9), das aus einem elastischen Material gefertigt und innerhalb der Hülle (34) angeordnet ist, um axial zwischen einem ersten radialen Abschnitt (342) der Hülle (34) und einer Seitenfläche (300) einer ersten Halblaufbahn (30) vorgeladen zu sein,
- ein Dämpfungselement (11), das durch eine einzelne Schicht ausgebildet ist, die mit beiden Halblaufbahnen (30, 32) in Kontakt steht und radial zwischen dem axialen Abschnitt (340) der Hülle (34) und jeder der Halblaufbahnen (30, 32) angeordnet ist, und
- ein zweites Vorspannelement (13), das sich axial zwischen einem zweiten radialen Abschnitt (344) und einer Seitenfläche (320) der zweiten Halblaufbahn (32) erstreckt, **dadurch gekennzeichnet, dass** das Dämpfungselement (11) ein einzelnes Teil mit dem Vorspannelement (9) und dem zweiten Vorspannelement (13) ausbildet, wobei das Dämpfungselement (11) und der zweite Vorspannabschnitt (13) durch eine Schicht aus Dämpfungsmaterial am axialen Abschnitt (340) und zweiten radialen Abschnitt (344) der Hülle (34) ausgebildet sind.

2. Wälzlager nach Anspruch 1, wobei das Dämpfungselement (11) aus einem Elastomermaterial gefertigt ist.

3. Wälzlager nach einem der vorangehenden Ansprüche, wobei die Wälzkörper Kugeln (7) sind.

4. Wälzlager nach einem der vorangehenden Ansprüche, wobei zumindest eine der Halblaufbahnen durch einen Draht (30, 32) ausgebildet ist.

5. Wälzlager nach Anspruch 1, wobei zumindest eine der Halblaufbahnen ein kreisförmiger Ring (15) ist, der mit einer Kontaktfläche (150) mit einer Kugelform zum Kontaktieren der Wälzkörper (7) bereitgestellt ist.

6. Wälzlager nach Anspruch 5, wobei eine Kante (152) des kreisförmigen Rings (15) mit dem Dämpfungselement (11) in Kontakt steht.

7. Wälzlager nach einem der vorangehenden Ansprüche, wobei die Hülle (34) auf zumindest einer Seite einen axialen Abschnitt (342a) umfasst, der mit dem radialen Abschnitt (342) verbunden ist, um eine ringförmige Kammer auszubilden, die im Querschnitt wie ein U geformt ist, und wobei das ringförmige Vorspannelement (9) in dieser Kammer aufgenommen ist.

8. Verfahren zum Fertigen eines Wälzlagers (1) nach einem der vorangehenden Ansprüche, wobei es Schritte umfasst, bestehend aus:
a) Fertigen einer vorgeformten Hülle (34'), wobei einer ihrer radialen Abschnitte (344') sich in einem Vorverformungszustand axial vom axialen Abschnitt (340) der Hülle (34') erstreckt,
b) Bereitstellen der vorgeformten Hülle (34') mit einer Schicht aus Dämpfungsmaterial (11), die als ein einzelnes Teil mit dem Vorspannelement (9) und dem zweiten Vorspannelement (13) am axialen Abschnitt (340) ausgebildet ist, wobei sich ein erster radialer Abschnitt (342) und der radiale Abschnitt (344') in einem Vorverformungszustand axial erstrecken,
c) Montieren der Halblaufbahnen (30, 32) und der Wälzkörper (7) in der Hülle (34'),
d) Formen der Hülle (34) durch Verformen des radialen Abschnitts (344') zu einer der Halblaufbahnen (32), sodass der radiale Abschnitt (344) die Halblaufbahnen (30, 32) und die Wälzkörper (7) vorspannt.

## Revendications

1. Palier à roulement (1) comprenant une bague extérieure (3) et une bague intérieure (5), les deux bagues ayant un chemin de roulement (30, 32, 50) pour éléments de roulement (7) placés entre lesdites bagues intérieure et extérieure (3, 5) en contact avec lesdits chemins de roulement (30, 32, 50), au moins l'une des bagues (3) comprenant:
- une enveloppe (34) ayant une partie axiale (340) et, reliée aux bords de la partie axiale (340), deux parties radiales (342, 344),
- deux demi-chemins de roulement (30, 32) disposés dans ladite enveloppe (34) pour former le chemin de roulement de cette bague (3),
- un élément de précontrainte (9) annulaire réalisé en un matériau élastique et disposé à l'intérieur de l'enveloppe (34) pour être axialement précontraint entre une première partie radiale (342) de l'enveloppe (34) et une face latérale (300) d'un premier demi-chemin de roulement (30),
- un élément amortisseur (11) formé d'une seule couche qui est en contact avec les deux demi-chemins de roulement (30, 32) et disposé radialement entre la partie axiale (340) de l'enveloppe (34) et chacun des demi-chemins de roulement (30, 32), et
- un second élément de précontrainte (13) s'étendant axialement entre une seconde partie radiale (344) et une face latérale (320) du second demi-chemin de roulement (32),
**caractérisé en ce que** l'élément amortisseur (11) forme une seule pièce avec l'élément de précontrainte (9) et le second élément de précontrainte (13), ledit élément amortisseur (11) et ledit second élément de précontrainte (13) étant formés d'une couche de matériau amortisseur sur la partie axiale (340) et la seconde partie radiale (344) de l'enveloppe (34).

2. Palier à roulement selon la revendication 1, dans lequel l'élément amortisseur (11) est constitué d'un matériau élastomère.

3. Palier à roulement selon l'une quelconque des revendications précédentes, dans lequel les éléments de roulement sont des billes (7).

4. Palier à roulement selon l'une quelconque des revendications précédentes, dans lequel au moins l'un des demi-chemins de roulement est constitué d'un fil (30, 32) .

5. Palier à roulement selon la revendication 1, dans lequel au moins l'un des demi-chemins de roulement est une bague annulaire (15) pourvue d'une surface de contact (150) de forme sphérique pour le contact avec les éléments de roulement (7).

6. Palier à roulement selon la revendication 5, dans lequel un bord (152) de la bague annulaire (15) est en contact avec l'élément amortisseur (11).

7. Palier à roulement selon l'une quelconque des revendications précédentes, dans lequel l'enveloppe (34) comprend, sur au moins un côté, une partie axiale (342a) reliée à la partie radiale (342) pour former une chambre annulaire en forme de U en section transversale et dans lequel l'élément de précontrainte (9) annulaire est logé dans cette chambre.

8. Procédé de fabrication d'un palier à roulement (1) selon l'une quelconque des revendications précédentes, **caractérisé en ce qu'**il comprend les étapes consistant à:
a) fabriquer une enveloppe préformée (34') dont l'une des parties radiales (344') s'étend axialement depuis la partie axiale (340) de l'enveloppe (34'), dans un état de pré-déformation,
b) munir l'enveloppe préformée (34') d'une couche de matériau amortisseur (11) formée d'une seule pièce avec l'élément de précontrainte (9) et le second élément de précontrainte (13) sur la partie axiale (340), une première partie radiale (342) et la partie radiale (344') s'étendant axialement dans un état de pré-déformation,
c) monter les demi-chemins de roulement (30, 32) et les éléments de roulement (7) dans l'enveloppe (34'),
d) façonner l'enveloppe (34) en déformant la partie radiale (344') vers l'un des demi-chemins de roulement (32) de sorte que la partie radiale (344) précontraint les demi-chemins de roulement (30, 32) et les éléments de roulement (7).
